# EUROPEAN PATENT APPLICATION

(11) **EP 4 512 683 A1**
(43) Date of publication of application: **26.02.2025**
(21) Application number: 22784976.7
(22) Date of filing: 06.04.2022
(51) Int. Cl.: B60W 60/00, B60W 30/08, G05D 1/00

(54) **VEHICLE FOR PERFORMING MINIMAL RISK MANEUVER AND OPERATION METHOD FOR VEHICLE**

(30) Priority: 08.04.2021 KR 20210045583
(71) Applicant: Hyundai Motor Company, Seoul 06797 (KR); Kia Corporation, Seoul 06797 (KR)
(72) Inventor: MIN, Young Bin, Gwangmyeong-si Gyeonggi-do 14305 (KR); PARK, Jong Sung, Hwaseong-si Gyeonggi-do 18237 (KR); JANG, Chan Jong, Hwaseong-si Gyeonggi-do 18270 (KR); YOON, Chul Hwan, Seoul 05266 (KR)
(74) Representative: Hoffmann Eitle
(86) International application number: PCT/KR2022/004994
(87) International publication number: WO 2022/216067

(57) **Abstract**

Various embodiments of the present disclosure disclose a vehicle that performs a minimal risk maneuver (MRM) and a method for operating the vehicle. Disclosed is an autonomous driving vehicle, including: at least one sensor configured to sense a surrounding environment of the vehicle to generate surrounding environment information; a processor configured to monitor a state of the vehicle to generate vehicle state information and to control autonomous driving of the vehicle; and a controller configured to control operation of the vehicle according to control of the processor, and the processor may be configured to sense whether minimal risk maneuver is needed based on at least one among the surrounding environment information and the vehicle state information during autonomous driving of the vehicle; and to control at least one function of the vehicle such that the vehicle is stopped on a road shoulder when the minimal risk maneuver is needed.

## Description

### [Technical Field]

The present disclosure relates to a vehicle configured to execute a minimal risk maneuver, and a method for operating the vehicle.

### [Background Art]

Recently, advanced driver assistance systems (ADAS) have been developed to assist drivers in driving. The ADAS has multiple sub-classifications and provides convenience to the driver. Such ADAS is also called autonomous driving or ADS (Automated Driving System).

Meanwhile, an abnormality may occur in the autonomous driving system while the vehicle performs the autonomous driving. The vehicle may get into a dangerous state if appropriate measures are not taken against such abnormality in the autonomous driving system.

### [DISCLOSURE]

### [Technical Problem]

Accordingly, various embodiments of the present disclosure disclose a vehicle that performs a minimal risk maneuver (MRM) to remove (or reduce) a risk and a method for operating the vehicle when a situation in which normal autonomous driving is impossible is detected during autonomous driving.

Various embodiments of the present disclosure disclose a system which stops on a shoulder of a road through the minimal risk maneuver, when a situation in which normal autonomous driving is impossible is detected during the autonomous driving of the vehicle, and a method for operating the system.

Technical objects to be achieved by the present disclosure are not limited to the aforementioned objects, and those skilled in the art to which the present disclosure pertains may evidently understand other technical objects from the following description.

### [Technical Solution]

One embodiment is an autonomous driving vehicle, including: at least one sensor configured to sense surrounding environment of the vehicle to generate surrounding environment information; a processor configured to monitor a state of the vehicle to generate vehicle state information and to control autonomous driving of the vehicle; and a controller configured to control operation of the vehicle according to control of the processor, and the processor may be configured to sense whether minimal risk maneuver is needed based on at least one among the surrounding environment information and the vehicle state information during autonomous driving of the vehicle; and to control at least one function of the vehicle such that the vehicle is stopped on a road shoulder when the minimal risk maneuver is needed.

According to an embodiment, the processor may be configured to determine a road shoulder stop type to be a type of the minimal risk maneuver when the minimal risk maneuver is needed, and perform, based on a size of the shoulder of a road, full-shoulder stop by which the vehicle stops in a state in which the vehicle as a whole is positioned on the shoulder of a road, or perform half-shoulder stop by which the vehicle stops in a state in which only some of the vehicle is positioned on the shoulder of a road.

According to an embodiment, the processor may be configured to compare a size of the shoulder of a road with a specified size, control the vehicle to perform the full-shoulder stop when the size of the shoulder of a road is equal to or greater than the specified size, control the vehicle to perform the half-shoulder stop when the size of the shoulder of a road is equal to or smaller than the specified size, and the specified size may be a predetermined size according to a size of the vehicle or a type of the vehicle.

According to an embodiment, the processor may be configured to control the vehicle to be moved to an outer-most lane after the road shoulder stop type is determined to be the type of the minimal risk maneuver, and measure the size of the shoulder of a road based on data collected from at least one sensor in a state in which the vehicle is positioned in the outermost lane.

According to an embodiment, the processor may be configured to obtain information on the size of the shoulder of a road from map data.

According to an embodiment, the processor may be configured to determine whether the vehicle is stopped on the shoulder of a road within a specified time from a time point when the road shoulder stop type is determined, determine that a minimal risk condition is satisfied when the vehicle is stopped on the shoulder of a road within the specified time, and control the vehicle to maintain a state in which the minimal risk condition is satisfied.

According to an embodiment, the processor may be configured to change the type of the minimal risk maneuver from the road shoulder stop type to an in-lane stop type when the vehicle is not stopped on the shoulder of a road within the specified time, and control the vehicle to stop within a boundary of a lane in which the vehicle travels.

According to an embodiment, the processor may be configured to determine whether the vehicle is stopped within the lane in which the vehicle travels within a specified time from a time point when the type of the minimal risk maneuver is changed to the in-lane stop type, determine that the minimal risk condition is satisfied when the vehicle is stopped within the lane in which the vehicle travels within the specified time, and control the vehicle to maintain a state in which the minimal risk condition is satisfied.

According to an embodiment, the processor may be configured to change the type of the minimal risk maneuver from the in-lane stop type to a straight stop type when the vehicle is not stopped within the lane in which the vehicle travels within the specified time, and control the vehicle to perform straight stop.

According to an embodiment, the at least one function may include at least one among acceleration, deceleration, lateral control, lane detection, lane change, steering, obstacle recognition and distance detection, powertrain control, and safe area detection.

Another embodiment is a method for operating an autonomous driving vehicle, including: obtaining surrounding environment information by sensing a surrounding environment of the vehicle during autonomous driving of the vehicle, obtaining vehicle state information by monitoring a state of the vehicle during the autonomous driving of the vehicle and , sensing whether minimal risk maneuver is needed based on at least one among the surrounding environment information and the vehicle state information during autonomous driving of the vehicle and controlling at least one function of the vehicle such that the vehicle is stopped on a road shoulder when the minimal risk maneuver is needed.

According to an embodiment, the controlling at least one function of the vehicle such that the vehicle is stopped on a road shoulder may include: determining a road shoulder stop type to be a type of the minimal risk maneuver and performing full-shoulder stop, or half-shoulder stop based on a size of the shoulder of a road. Further, the full-shoulder stop may be stopping the vehicle in a state in which the vehicle as a whole is positioned on the shoulder of a road and the half-shoulder stop may be stopping the vehicle in a state in which only some of the vehicle is positioned on the shoulder of a road.

According to an embodiment, the performing full-shoulder stop, or half-shoulder stop based on a size of the shoulder of a road may include comparing a size of the shoulder of a road with a specified size; performing the full-shoulder stop when the size of the shoulder of a road is equal to or greater than the specified size and performing the half-shoulder stop when the size of the shoulder of a road is equal to or smaller than the specified size, and the specified size may be a predetermined size according to a size of the vehicle or a type of the vehicle.

According to an embodiment, the controlling at least one function of the vehicle such that the vehicle is stopped on a road shoulder may further include controlling the vehicle to be moved to an outer-most lane after the road shoulder stop type is determined to be the type of the minimal risk maneuver and measuring the size of the shoulder of a road based on data collected from at least one sensor in a state in which the vehicle is positioned in the outermost lane.

According to an embodiment, the controlling the vehicle such that the vehicle is stopped on a road shoulder may further include: obtaining information on the size of the shoulder of a road from map data.

According to an embodiment, the method may further include: determining whether the vehicle is stopped on the shoulder of a road within a specified time from a time point when the road shoulder stop type is determined; determining that a minimal risk condition is satisfied when the vehicle is stopped on the shoulder of a road within the specified time; and controlling the vehicle to maintain a state in which the minimal risk condition is satisfied.

According to an embodiment, the method may further include: when the vehicle is not stopped on the shoulder of a road within the specified time, changing the type of the minimal risk maneuver from the road shoulder stop type to an in-lane stop type; and controlling the vehicle to stop within a boundary of a lane in which the vehicle travels.

According to an embodiment, the method may further include: determining whether the vehicle is stopped within the lane in which the vehicle travels within a specified time from a time point when the type of the minimal risk maneuver is changed to the in-lane stop type; determining that the minimal risk condition is satisfied when the vehicle is stopped within the lane in which the vehicle travels within the specified time; and controlling the vehicle to maintain a state in which the minimal risk condition is satisfied.

According to an embodiment, the method may further include: when the vehicle is not stopped within the lane in which the vehicle travels within the specified time, changing the type of the minimal risk maneuver from the in-lane stop type to a straight stop type; and controlling the vehicle to perform straight stop.

According to an embodiment, the at least one function may include controlling at least one among acceleration, deceleration, lateral control, lane detection, lane change, steering, obstacle recognition and distance detection, powertrain control, and safe area detection.

### [Advantageous Effect]

According to various embodiments of the present disclosure, it is possible to improve safety by minimizing risk which may occur to a vehicle through execution of the minimal risk maneuver, when a situation in which normal autonomous driving is impossible is detected during the autonomous driving of the vehicle.

### [Description of Drawings]

FIG. 1 is a block diagram of a vehicle according to various embodiments of the present disclosure.
FIG. 2 is a view illustrating minimal risk maneuver (MRM) types according to various embodiments of the present disclosure.
FIGS. 3A to 3B are example illustrations of an area of a shoulder according to various embodiments of the present disclosure.
FIG. 4 is a flowchart illustrating operations of a vehicle according to various embodiments of the present disclosure.
FIG. 5 is a flowchart illustrating execution of the minimal risk maneuver by the vehicle according to various embodiments of the present disclosure.
FIG. 6 is a flowchart illustrating execution of full-shoulder stop, or half-shoulder stop by the vehicle according to various embodiments of the present disclosure.
FIG. 7 is an example illustration of executing full shoulder stop by the vehicle according to various embodiments of the present disclosure.
FIG. 8 is an example illustration of executing half-shoulder stop by the vehicle according to various embodiments of the present disclosure.

### [Mode for Invention]

Hereinafter, embodiments are described in more detail with reference to accompanying drawings.

The construction and operational effect of the present disclosure will be clearly understood from the following detailed description. Prior to describing exemplary embodiments of the present disclosure in detail, it is noted that throughout the drawings the same components will be denoted by the same reference numerals when possible and a detailed description about existing components and functions is omitted when the subject matter of the present disclosure may be obscured by the description.

It is also noted that terms used in the detailed description of the present disclosure are defined below.

The vehicle refers to a vehicle in which the automated driving system (ADS) is provided and is capable of the autonomous driving. For example, by the ADS, the vehicle may perform at least one among steering, acceleration, deceleration, lane change and vehicle stopping (short stop) without a driver's manipulation. For example, the ADS may include at least one among Pedestrian Detection and Collision Mitigation System (PDCMS), Lane Change Decision Aid System (LCDAS), Land Departure Warning System (LDWS), Adaptive Cruise Control (ACC), Lane Keeping Assistance System (LKAS), Road Boundary Departure Prevention System (RBDPS), Curve Speed Warning System (CSWS), Forward Vehicle Collision Warning System (FVCWS), and Low Speed Following (LSF).

A driver is a human being who uses a vehicle, and is provided with a service of an autonomous driving system.

The vehicle control authority is an authority to control at least one component of the vehicle and/or at least one function of the vehicle. At least one function of the vehicle may include, for example, at least one among steering, acceleration, deceleration (or braking), lane change, lane detection, lateral control, obstacle recognition and distance detection, powertrain control, safe area detection, engine on/off, power on/off, and vehicle lock/unlock. The listed functions of the vehicle are merely examples for helping understanding, and embodiments of the present disclosure are not limited thereto.

A shoulder may mean a space between an outermost road boundary (or a boundary of an outermost lane) in a direction in which a vehicle is traveling and a road edge (e.g., kerb, guardrail).

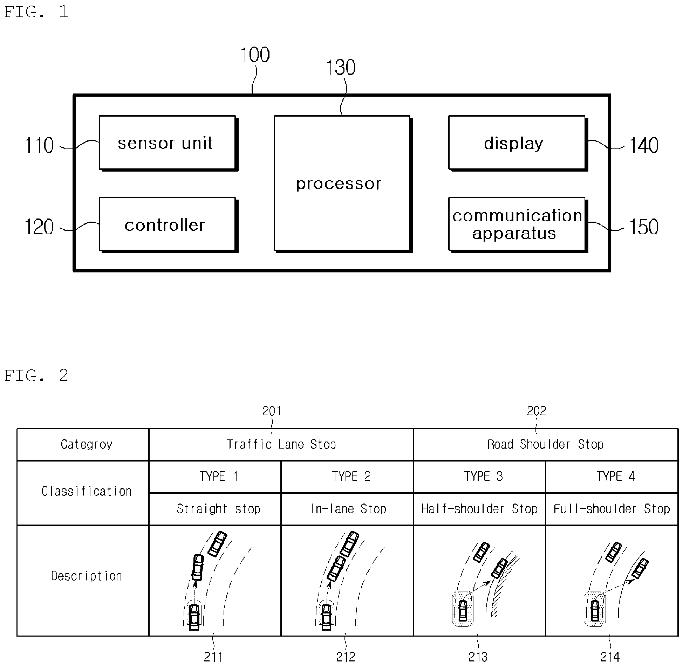

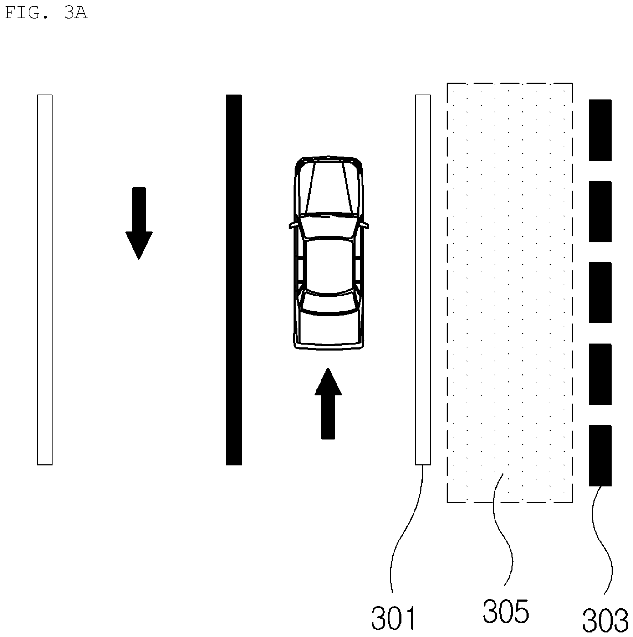

FIG. 1 is a block diagram of a vehicle according to various embodiments of the present disclosure. The configuration of the vehicle illustrated in FIG. 1 is one embodiment, and each component may be configured as one chip, one component, or one electronic circuit, or a combination of chips, components and/or electronic circuits. According to the embodiment, some of the components illustrated in FIG. 1 may be divided into a plurality of components and configured as different chips, different components, or different electronic circuits, and some components may be combined to form one chip, one component, or one electronic circuit. According to the embodiment, some of the components illustrated in FIG. 1 may be omitted or other components not illustrated may be added. At least some of the components of FIG. 1 will be described with reference to the FIGS. 2 and/or FIGS. 3A and 3A. FIG. 2 is a view illustrating minimal risk maneuver (MRM) types according to various embodiments of the present disclosure, and FIGS. 3A to 3B are example illustrations of an area of a shoulder according to various embodiments of the present disclosure.

Referring to FIG. 1, the vehicle 100 may include a sensor unit 110, a controller 120, a processor 130, a display 140, and a communication apparatus 150.

According to various embodiments, the sensor unit 110 may sense a surrounding environment of the vehicle 100 using at least one sensor, and generate data related to the surrounding environment based on the sensed result. For example, the sensor unit 110 may obtain information on objects around the vehicle (for example, other vehicle, a person, an object, a kerb, a guardrail, a lane, an obstacle) based on the sensed data obtained from at least one sensor. Information on the object around the vehicle may include at least one among a position of the object, a size of the object, a shape of the object, a distance to the object, and a relative speed to the object. As another example, the sensor unit 110 may measure a position of the vehicle 100 using at least one sensor. The sensor unit 110 may include, for example, at least one selected among a camera, a light detection and ranging (LIDAR) sensor, a radio detection and ranging (RADAR) sensor, an ultrasonic sensor, an infrared sensor, and a position measurement sensor. The listed sensors are merely examples for helping understanding, and the sensors included in the sensor unit 110 of the present disclosure are not limited thereto.

According to the embodiment, a camera may generate image data which includes an object positioned in front, at a rear and on a side of the vehicle 100, by capturing image around the vehicle. According to the embodiment, the lidar may generate information on an object positioned in front, at a rear and/or on a side of the vehicle 100 using light (or laser). According to the embodiment, the radar may generate information on an object positioned in front, at a rear and/or on a side of the vehicle 100 using electromagnetic waves (or radio waves). According to the embodiment, the ultrasonic sensor may generate information on an object positioned in front, at a rear and/or on a side of the vehicle 100 using ultrasonic waves. According to the embodiment, the infrared sensor may generate information on an object positioned in front, at a rear and/or on a side of the vehicle 100 using infrared rays.

According to the embodiment, the position measurement sensor may measure the current position of the vehicle 100. The position measurement sensor may include at least one among a Global Positioning System (GPS) sensor, a Differential Global Positioning System (DGPS) sensor and a Global Navigation Satellite System (GNSS) sensor. The position measurement sensor may generate position data of the vehicle based on a signal generated by at least one among a GPS sensor, DGPS sensor and GNSS sensor.

According to various embodiments, the controller 120 may control operation of at least one component of the vehicle 100 and/or at least one function of the vehicle according to the control of the processor 130. The at least one function may be, for example, at least one among a steering function, an acceleration function (or a longitudinal acceleration function), a deceleration function (or a longitudinal deceleration function, a brake function), a lane change function, a lane detection function, an obstacle recognition and a distance detection function, a lateral control function, a powertrain control function, a safety zone detection function, an engine on/off, a power on/off, and a vehicle lock/unlock function.

According to the embodiment, the controller 120 may control at least one component of the vehicle and/or at least one function of the vehicle for autonomous driving and/or a minimal risk maneuver (MRM) of the vehicle 100 according to the control of the processor 130. For example, for the minimal risk maneuver, the controller 120 may control the operation of at least one function among a steering function, an acceleration function, a deceleration function, a lane change function, a lane detection function, a lateral control function, an obstacle recognition and distance detection function, a powertrain control function, and a safe zone detection function.

According to various embodiments, the processor 130 may control the overall operation of the vehicle 100. According to the embodiment, the processor 130 may include an electrical control unit (ECU) capable of integrally controlling components in the vehicle 100. For example, the processor 130 may include a central processing unit (CPU) or a micro processing unit (MCU) capable of performing arithmetic processing.

According to various embodiments, when a specified event is generated, the processor 130 may activate the Automated Driving System (ADS) to control components in the vehicle 100 such that the vehicle performs autonomous driving. The specified event may be generated when autonomous driving of the driver is requested, vehicle control authority from the driver is delegated, or a condition specified by the driver and/or designer is satisfied.

The processor 130 may determine whether the normal autonomous driving is possible based on at least one among vehicle state information and surrounding environment information, during the autonomous driving. According to an embodiment, from the time when ADS is activated, the processor 130 may obtain vehicle state information indicating whether mechanical and/or electrical faults of components inside the vehicle occur or not, by monitoring mechanical and/or electrical states of components inside the vehicle (e.g., sensors, actuators and the like). The vehicle state information may include information about mechanical states and/or electrical states of components inside the vehicle. For example, the vehicle state information may include information indicating whether functions necessary for autonomous driving can normally operate or not according to mechanical and/or electrical states of components inside the vehicle. According to an embodiment, the processor 130 may obtain environment information around the vehicle through the sensor unit 110, from the time when ADS is activated.

The processor 130 may determine whether functions necessary for autonomous driving are normally operable based on the vehicle state information. Functions required for autonomous driving may include, for example, at least one among a lane detection function, a lane change function, a lateral control function, a deceleration (or brake control) function, a powertrain control function, a safe area detection function, an obstacle recognition function, and a distance sensing function. When the normal operation of at least one among the functions required for autonomous driving is impossible, the processor 130 may determine that normal autonomous driving is impossible.

The processor 130 may determine whether the vehicle state is suitable for general driving conditions based on the vehicle state information. For example, the processor 130 may determine whether the vehicle's mechanical state information (e.g., tire pressure information or engine overheat information) is suitable for general driving conditions. When the vehicle state is not suitable for general driving conditions, the processor 130 may determine that normal autonomous driving is impossible.

According to the embodiment, the processor 130 may determine whether an environment around the vehicle is suitable for an operation design domain (ODD) of autonomous driving based on at least one among the surrounding environment information. The operation design domain may represent a condition for the surrounding environment in which autonomous driving normally operates. The processor 130 may determine that normal autonomous driving is impossible when the surrounding environment information of the vehicle does not match the operation design domain.

According to various embodiments, when the normal autonomous driving is impossible, the processor 130 may determine it as a situation in which the MRM to minimize the risk of an accident is required. The processor 130 may determine the MRM type in a situation in which the MRM execution is needed.

According to the embodiment, as illustrated in FIG. 2, the minimal risk maneuver (MRM) types may include a traffic lane stop type 201 and a road shoulder stop type 202. The traffic lane stop type may be divided into straight stop 211 and in-lane stop 212, and the road shoulder stop type may be divided into half-shoulder stop 213 and full-shoulder stop 214.

The straight stop type 211 is a type of stopping using the longitudinal deceleration function only. For example, the straight stop type 211 may be performed in a situation where the lane detection is impossible, and the lateral control is impossible due to the defect of the actuator, etc.

The in-lane stop type 212 is a type, in which the vehicle stops within a boundary of the lane in which it is traveling. For example, the in-lane stop type 212 may mean a type of stopping within a boundary of the lane in which the vehicle is traveling through the lateral control and/or deceleration. The lane in which the vehicle is traveling may mean a lane in which the vehicle is traveling at a time point when it is determined that the MRM execution is needed.

The half-shoulder stop 213 is a type in which the vehicle stops in a state in which a portion of the vehicle is located on a shoulder of a road, and the lane change may be accompanied. For example, the half-shoulder stop 213 may mean a type in which the vehicle stops in a state in which a portion of the vehicle is located on a shoulder after moving to be out of a road boundary (or boundary of the outermost lane) through the longitudinal acceleration, longitudinal deceleration, and/or lateral control.

The full-shoulder stop 214 is a type in which the vehicle stops in a state in which the vehicle as a whole is positioned on a shoulder of a road, and the lane change may be accompanied. For example, the full-shoulder stop 214 may mean a type in which the vehicle stops in a state in which the vehicle as a whole moves to be on a shoulder of a road after moving to be out of a road boundary through the longitudinal acceleration, longitudinal deceleration, and/or lateral control.

According to an embodiment, the processor 130 may determine one among the traffic lane stop type and the road shoulder stop type to be the MRM type based on at least one among the vehicle state information, surrounding environment information, and the Road Traffic Act. According to an embodiment, the processor 130 may determine a basic type predetermined by the designer to be the MRM type, regardless of vehicle state information, surrounding environment information, and the Road Traffic Act. The predetermined basic type may be the road shoulder stop type. This is because the Road Traffic Act permits or recommends the vehicle to stop on a shoulder which is relatively safer area, in case where an emergency occurs due to a defect of the vehicle and the like. Therefore, various embodiments of the present disclosure predetermine the road shoulder stop type to be the basic type, thereby minimizing an effect of the MRM on the traffic flow, minimizing possibility of a second collision, and allowing the driver or passenger to escape to be out of the road.

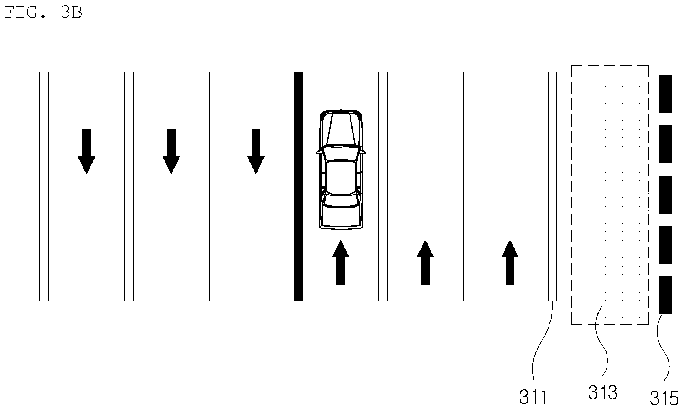

According to an embodiment, when the road shoulder stop type is determined to be the MRM type, the processor 130 may move the vehicle toward the shoulder of a road and control a position of the vehicle such that at least a portion of the vehicle is positioned on the shoulder through the lateral and/or longitudinal control. The processor 130 may obtain position information on a shoulder of a road from at least one sensor of the sensor unit 110 or prestored map data, and may move the vehicle toward the shoulder of a road based on the obtained position information on the shoulder of a road. As illustrated in FIGS. 3A and 3B, the shoulder of a road may mean a space (305, 315) between an outermost road boundary (301, 311) positioned on a right side of the vehicle and an obstacle (303, 313) at a road edge. The obstacle (303, 313) may include at least one among the kerb and the guardrail.

According to an embodiment, the processor 130 may control the vehicle such that the vehicle gets into a state in which the vehicle is in parallel with a boundary of the outermost lane and/or an obstacle (e.g., kerb or guardrail) adjacent to the outermost lane while moving toward the shoulder of a road. At this instance, the processor 130 may control the vehicle so that the vehicle does not stop or does not travel backward.

According to an embodiment, the processor 130 may perform the half-shoulder stop or the full-shoulder stop based on size information of the shoulder of a road (e.g., a width information of the shoulder). The size information of the shoulder of a road may be obtained from at least one sensor of the sensor unit 110 or prestored map data. For example, the processor 130 may obtain a width of the shoulder of a road from the map data, and may compare the width of the shoulder of a road with a specified width. The specified width may be a width of the vehicle, or a predetermined width according to a type of the vehicle. For example, when the vehicle is a passenger car, the specified width may be predetermined to be about 2m. When the width of the shoulder of a road is equal to or greater than the specified width, the processor 130 may control the vehicle such that the full-shoulder stop is performed. When the width of the shoulder of a road is equal to or smaller than the specified width, the processor 130 may control the vehicle such that the half-shoulder stop is performed.

According to an embodiment, the processor 130 may determine whether the vehicle is stopped on the shoulder of a road within a specified time, and may determine whether to change the MRM type based on the determination result. When the vehicle is not stopped on the shoulder of a road within the specified time, the processor 130 may change the type of the MRM from the road shoulder stop type to the in-lane stop type. For example, when the vehicle is not stopped on the shoulder of a road within the specified time, the processor 130 may change the type of the MRM from the road shoulder stop type to the in-lane stop type of the traffic lane stop type, and may control the vehicle to perform the in-lane stop. When the vehicle stopping on the shoulder of a road is not completed within the specified time, the processor 130 may change the type of the MRM from the in-lane stop type to the straight stop type, and may control the vehicle to perform the straight stop.

According to various embodiments, the processor 130 may perform operations for stopping the vehicle according to the determined MRM type, and determine whether the Minimal Risk Condition (MRC) is satisfied. The MRC may mean a stopped state in which the vehicle speed is 0. For example, the processor 130 may determine whether the vehicle 100 gets into a stopped state in which the speed of the vehicle 100 is 0 while performing at least one operation according to the determined MRM type. When the vehicle 100 gets into a state where the speed is 0, the processor 130 may determine that the MRC is satisfied.

According to various embodiments, when the MRC is satisfied, the processor 130 may end the MRM operation and switch the autonomous driving system (ADS) to a standby mode or an off-state. According to the embodiment, the processor 130 may control the autonomous driving system (ADS) to be transferred to the driver (or user) after switching the autonomous driving system (ADS) to the standby mode or off-state.

According to various embodiments, the display 140 may visually display information related to the vehicle 100. For example, the display 140 may provide various information related to the state of the vehicle 100 to the driver of the vehicle 100 under the control of the processor 130. The various information related to the state of the vehicle may include at least one among information indicating whether various components included in the vehicle and/or at least one function of the vehicle are normally operated, and information indicating the driving state of the vehicle. The driving state of the vehicle may include, for example, at least one among a state in which the vehicle is autonomously driving, a state in which the MRM is underway, a state in which the MRM is completed, and a state in which autonomous driving is ended.

According to various embodiments, the communication apparatus 150 may communicate with an external device of the vehicle 100. According to embodiments, the communication apparatus 150 may receive data from the external device of the vehicle 100 or transmit data to the external device of the vehicle 100 under the control of the processor 130. For example, the communication apparatus 150 may perform communication using a wireless communication protocol or a wired communication protocol.

In FIG. 1 described above, the controller 120 and the processor 130 have been described as separate components, but according to various embodiments, the controller 120 and the processor 130 may be integrated into one component.

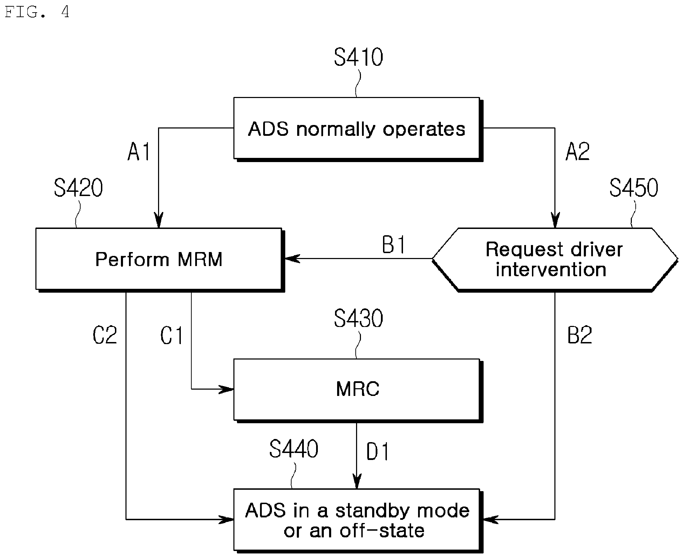

FIG. 4 is a flowchart illustrating operations of the vehicle according to various embodiments of the present disclosure. The vehicle in FIG. 4 may the vehicle 100 in FIG. 1.

Referring to FIG. 4, the vehicle 100 may normally operate the ADS in an operation S410.

According to the embodiment, the vehicle 100 may monitor the vehicle state and the surrounding environment while performing the autonomous driving according to the normal operation of the ADS. The vehicle 100 may sense whether the MRM is required based on information obtained by monitoring the vehicle state and the surrounding environment. If the MRM is required, an event A1 may be generated.

According to the embodiment, the vehicle 100 may sense whether the driver (or user) intervention is required while performing the autonomous driving according to the normal operation of the ADS. When driver intervention is required, the vehicle 100 may perform a Request To Intervene (RTI) through the ADS or issue a warning. The driver intervention request or warning may be an event A2. The vehicle 100 may proceed to an operation S420 when the event A1 occurs in a state in which the ADS is normally operated.

When the event A2 occurs in a state in which the ADS operates normally, in an operation S450, the vehicle 100 may determine whether the driver intervention is sensed within a specified time. The vehicle 100 may determine that an event B1 has occurred when no driver intervention is sensed within the specified time. When the event B1 occurs, the vehicle 100 may proceed to an operation S420. The vehicle 100 may determine that an event B2 has occurred when the driver intervention is sensed within a specified time. When the event B2 occurs, the vehicle 100 may proceed to an operation S440.

The vehicle 100 may perform the MRM in the operation S420. According to an embodiment, the vehicle 100 may determine the MRM type based on at least one among the vehicle state information, the surrounding environment information, and the Road Traffic Act. According to an embodiment, the vehicle 100 may determine a basic type predetermined by the designer to be the MRM type, regardless of vehicle state information, surrounding environment information, and the Road Traffic Act. The predetermined basic type may be the road shoulder stop type. The MRM types, as illustrated in FIG. 2, may include the traffic lane stop type 201 which includes the straight stop 211 and in-lane stop 212, and the road shoulder stop type 202 which includes the full-shoulder stop 213 and the half-shoulder stop 214. The vehicle 100 may control at least one component in the vehicle to stop the vehicle according to the determined MRM type. According to an embodiment, the vehicle 100 may notify information indicating that the vehicle executes the MRM to another vehicle.

The vehicle 100 may determine whether the minimal risk condition is satisfied as the speed of the vehicle becomes 0 by performing the MRM in the operation S420. When the minimal risk condition is satisfied, the vehicle 100 may determine that an event C1 has occurred and proceed to an operation S430. The vehicle 100 may determine whether the driver's intervention is sensed while the MRM is underway. When the driver's intervention is sensed, the vehicle 100 may determine that an event C2 has occurred and proceed to the operation S440.

In the operation S430, the vehicle 100 may maintain a state in which the minimal risk condition is satisfied. The state in which the minimal risk condition is satisfied may mean a state in which the vehicle is stopped. For example, the vehicle 100 may maintain a stopped state. For example, the vehicle 100 may perform control operation for maintaining the vehicle in a stopped state regardless of an inclination of a road surface at the stopped location. The vehicle 100 may determine whether an event D1 occurs while maintaining a state in which the minimal risk condition is satisfied. The event D1 may include at least one among ADS being turned off the by the driver, and completion to transfer the vehicle control authority to the driver. When the event D1 occurs, the vehicle 100 may proceed to the operation S440.

The vehicle 100 may switch the ADS into a standby mode or an off-state in the operation S440. The vehicle 100 may not perform operation for the autonomous driving while the ADS is in a standby mode or an off-state.

The operations S410, S420, S430, and S450 described above may be in a state in which the ADS is activated, and the operation S440 may be in a state in which the ADS is inactive.

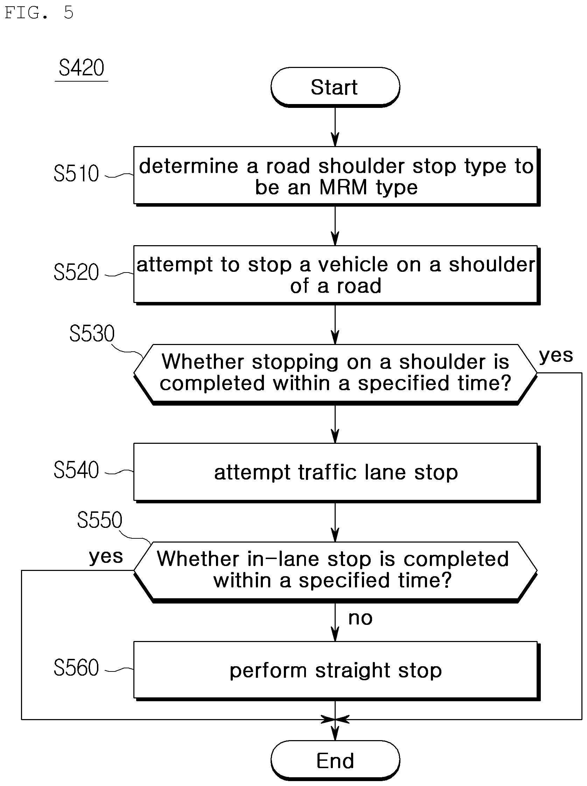

FIG. 5 is a flowchart illustrating execution of the minimal risk maneuver by the vehicle according to various embodiments of the present disclosure. The operations of FIG. 5 may be the detailed operations of the operation S420 of FIG. 4. In the following embodiment, each operation may be sequentially performed, but may be not necessarily performed sequentially. For example, the order of each operation may be changed, and at least two operations may be performed in parallel. In addition, the operations described hereinafter may be performed by the processor 130 and/or the controller 120 provided in the vehicle 100 or implemented as instructions executable by the processor 130 and/or the controller 120.

Referring to FIG. 5, the vehicle 100 may determine the road shoulder stop type to be the MRM type in an operation S510. According to an embodiment, the vehicle 100 may determine the road shoulder stop type to be the MRM type when the normal autonomous driving is impossible, based on the Road Traffic Act which permits or recommends the road shoulder stop. This is to minimize an effect of the MRM by the vehicle 100 on the traffic flow, minimize possibility of a second collision, and allow the driver and/or passenger to escape to be out of the road.

In an operation S520, the vehicle 100 may attempt to stop the vehicle on the shoulder of a road. According to an embodiment, the vehicle 100 may obtain at least one among information on position of the shoulder, information on a path from the current position of the vehicle 100 to the shoulder, and information on a surrounding obstacle based on the surrounding environment information obtained from the sensor and/or map data. The vehicle 100 may move to the shoulder of a road by controlling at least one among the longitudinal acceleration, the longitudinal deceleration, and the lateral control, based on the obtained at least one information. According to an embodiment, the vehicle 100 may control such that the vehicle 100 gets into a state in which the vehicle is in parallel with a boundary of the outermost lane and/or an obstacle (e.g., kerb or guardrail) at a road edge while moving toward the shoulder of a road. The vehicle 100 may control to not to stop or not to travel backward while the vehicle 100 moves to be in parallel with a boundary of the outermost lane and/or an obstacle at a road edge.

In an operation S530, the vehicle 100 may determine whether the vehicle is stopped on the shoulder of a road within a specified time. For example, the vehicle 100 may determine whether the vehicle is stopped on the shoulder of a road, in a state in which at least some of the vehicle is positioned on the shoulder of a road, within a specified time from a time point when the road shoulder stop type is determined to be the MRM type. When the vehicle is stopped on the shoulder of a road, in a state in which at least some of the vehicle is positioned on the shoulder of a road, within a specified time, the vehicle 100 may determine that the shoulder stop is completed within the specified time. According to an embodiment, the vehicle 100 which completed stopping on the shoulder may be in a state of being in parallel with a boundary of the outermost lane and/or an obstacle (e.g., kerb or guardrail) at a road edge while moving toward the shoulder of a road.

When at least some of the vehicle is not positioned on the shoulder of a road within a specified time, or the vehicle 100 is in a state of not being in parallel with a boundary of the outermost lane and/or an obstacle at a road edge, the vehicle 100 may determine that the shoulder stop is not completed within the specified time. According to an embodiment, when the vehicle 100 fails in obtaining the information on the shoulder of a road, or is in a situation where the road congestion is heavy, or there is an obstacle on the shoulder (e.g., other vehicle, an object, a pedestrian), or at least one function needed to perform the shoulder stop does not operate normally, the vehicle 100 may not complete the shoulder stop within the specified time. The at least one function needed to perform the shoulder stop may include at least one among the lateral control, the longitudinal deceleration (or brake), the lane change, and the safe area detection.

When the shoulder stop is completed within the specified time, the vehicle 100 may end the operations in FIG. 5, and proceed to the operation S430 in FIG. 4.

When the shoulder stop is not completed within the specified time, the vehicle 100 may proceed to an operation S540 and may attempt the traffic lane stop. When the shoulder stop is not completed within the specified time, the vehicle 100 may determine that the shoulder stop is impossible, and may change to the in-lane stop type as the MRM type. The vehicle 100 may sense the lane in which the vehicle is traveling based on the sensor, and control to stop within the traveling lane by using the longitudinal deceleration and/or the lateral control.

In an operation S550, the vehicle 100 may determine whether the in-lane stop is completed within a specified time. For example, the vehicle 100 may determine whether the vehicle is stopped within the lane in which the vehicle is traveling within a specified time from a time point when the in-lane stop is determined to be the MRM type. When the vehicle is stopped within the lane in which the vehicle is traveling within the specified time, the vehicle 100 may determine that the in-lane stop is completed within the specified time. When the vehicle is not stopped within the lane in which the vehicle is traveling within the specified time, the vehicle 100 may determine that the in-lane stop is not completed within the specified time. According to an embodiment, when at least one function needed to perform the in-lane stop does not normally operate, the vehicle 100 may not complete the in-lane stop within the specified time. The at least one function needed to perform the in-lane stop may include at least one among the lateral control, and the longitudinal deceleration (or brake).

When the in-lane stop is completed within the specified time, the vehicle 100 may end the operations in FIG. 5, and proceed to the operation S430 in FIG. 4.

When the in-lane stop is not completed within the specified time, the vehicle 100 may attempt the straight stop in an operation S560. For example, when the in-lane stop is not completed within the specified time, the vehicle 100 may determine that the vehicle is in a state in which the shoulder stop is impossible, and may change the MRM type to the straight stop type. The vehicle 100 may control to stop by using the longitudinal deceleration only.

When the straight stop is completed, the vehicle 100 may end the operations in FIG. 5, and proceed to the operation S430 in FIG. 4.

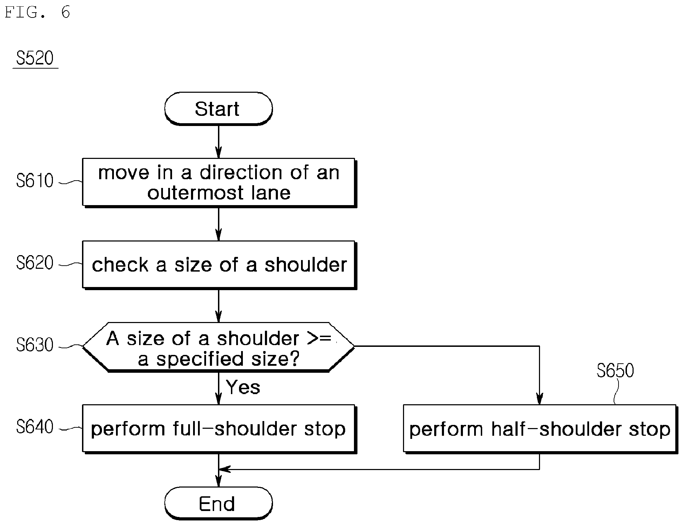

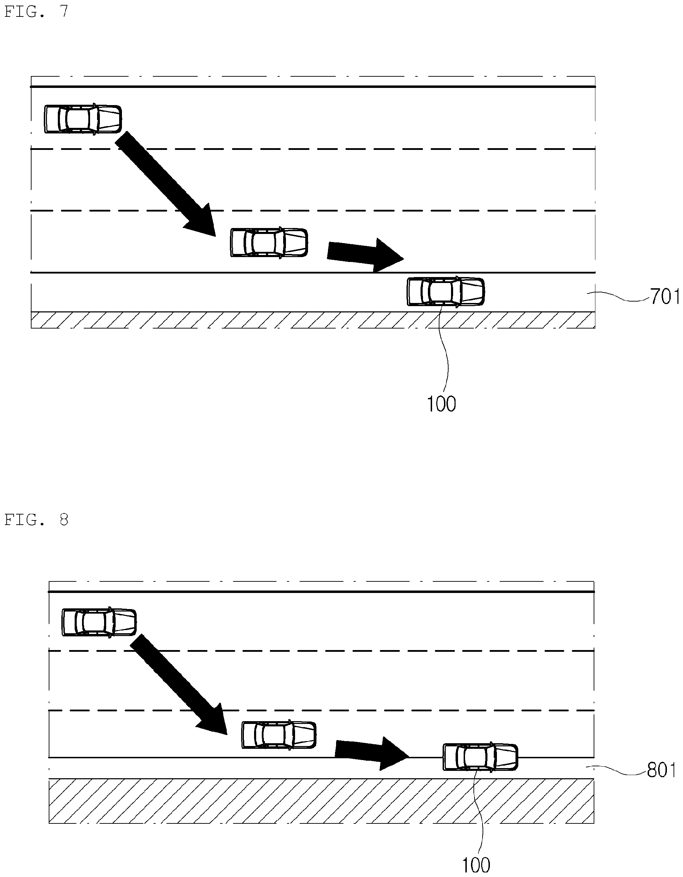

FIG. 6 is a flowchart illustrating execution of full-shoulder stop, or half-shoulder stop by the vehicle according to various embodiments of the present disclosure. The operations of FIG. 6 may be the detailed operations of the operation S520 of FIG. 5. In the following embodiment, each operation may be sequentially performed, but may be not necessarily performed sequentially. For example, the order of each operation may be changed, and at least two operations may be performed in parallel. In addition, the operations described hereinafter may be performed by the processor 130 and/or the controller 120 provided in the vehicle 100 or implemented as instructions executable by the processor 130 and/or the controller 120. At least some of the components of FIG. 6 will be described with reference to the FIGS. 7 and 8. FIG. 7 is an example illustration of executing full shoulder stop by the vehicle according to various embodiments of the present disclosure, and FIG. 8 is an example illustration of executing half-shoulder stop by the vehicle according to various embodiments of the present disclosure.

Referring to FIG. 6, the vehicle 100 may move in a direction of the outermost lane in an operation S610. For example, the vehicle 100 may move in a direction of the outermost lane positioned on a right side based on a direction in which the vehicle 100 is traveling. The outermost lane may be sensed by using the sensor, and/or map data. The vehicle 100 may move in the direction of the outermost lane, by using at least one function among the lateral control, the longitudinal deceleration, and the lane change.

The vehicle 100 may check a size of the shoulder in an operation S620. The size of the shoulder may be obtained based on data sensed through the sensor unit 110 in a state in which the vehicle is moved to the outermost lane, or from map data. The size of the shoulder may include at least one among, for example, a width of the shoulder, and a length of the shoulder.

The vehicle 100 may compare a size of the shoulder and a specified size in an operation S630, and may determine whether the size of the shoulder is equal to or greater than the specified size. The specified size may include the width and/or the length of the vehicle, or may include a predetermined width and/or length according to a type of the vehicle. For example, when the vehicle is a passenger car, the specified size may include a specified width value of about 2m.

When the size of the shoulder is equal to or greater than the specified size, the vehicle 100 may perform the full-shoulder stop in an operation S640. For example, as illustrated in FIG. 7, the vehicle 100 may move such that the vehicle 100 as a whole moves to be on the shoulder 701 by moving to be out of the boundary (or the outermost lane) through the longitudinal and/or lateral control, and then stop.

When the size of the shoulder is equal to or smaller than the specified size, the vehicle 100 may perform the half-shoulder stop in an operation S650. For example, as illustrated in FIG. 8, the vehicle 100 may move such that only a portion of the vehicle 100 moves to be on the shoulder 701 by moving to be out of the boundary (or the outermost lane) through the longitudinal and/or lateral control, and then stop.

As described above, according to the various embodiments of the present disclosure, the vehicle which cannot normally perform the autonomous driving stops on the shoulder of a road, thereby minimizing an effect of the MRM on the traffic flow, minimizing possibility of a second collision, and allowing the driver or passenger to escape to be out of the road.

In one or more exemplary embodiments, the functions described may be implemented in hardware, software, firmware, or any combination thereof. If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

When the embodiments are implemented in program code or code segments, it should be appreciated that a code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. Additionally, in some aspects, the steps and/or actions of a method or algorithm can reside as one or any combination or set of codes and/or instructions on a machine readable medium and/or computer readable medium, which can be incorporated into a computer program product.

For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

As used herein, the term to "infer" or "inference" refers generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Furthermore, as used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

## Claims

1. An autonomous driving vehicle, comprising:
at least one sensor configured to sense surrounding environment of the vehicle to generate surrounding environment information;
a processor configured to monitor state of the vehicle to generate vehicle state information and to control autonomous driving of the vehicle; and
a controller configured to control operation of the vehicle according to control of the processor,
wherein the processor is configured to:
sense whether minimal risk maneuver is needed based on at least one among the surrounding environment information and the vehicle state information during autonomous driving of the vehicle; and
control at least one function of the vehicle such that the vehicle is stopped on a road shoulder when the minimal risk maneuver is needed.

2. The autonomous driving vehicle of claim 1,
wherein the processor is configured to:
determine a road shoulder stop type to be a type of the minimal risk maneuver when the minimal risk maneuver is needed, and
perform, based on a size of the shoulder of a road, full-shoulder stop by which the vehicle stops in a state in which the vehicle as a whole is positioned on the shoulder of a road, or perform half-shoulder stop by which the vehicle stops in a state in which only some of the vehicle is positioned on the shoulder of a road.

3. The autonomous driving vehicle of claim 2,
wherein the processor is configured to:
compare a size of the shoulder of a road with a specified size,
control the vehicle to perform the full-shoulder stop when the size of the shoulder of a road is equal to or greater than the specified size, and
control the vehicle to perform the half-shoulder stop when the size of the shoulder of a road is equal to or smaller than the specified size, and
wherein the specified size is a predetermined size according to a size of the vehicle or a type of the vehicle.

4. The autonomous driving vehicle of claim 2,
wherein the processor is configured to
control the vehicle to be moved to an outer-most lane after the road shoulder stop type is determined to be the type of the minimal risk maneuver, and
measure the size of the shoulder of a road based on data collected from at least one sensor in a state in which the vehicle is positioned in the outermost lane.

5. The autonomous driving vehicle of claim 2,
wherein the processor is configured to obtain information on the size of the shoulder of a road from map data.

6. The autonomous driving vehicle of claim 2,
wherein the processor is configured to:
determine whether the vehicle is stopped on the shoulder of a road within a specified time from a time point when the road shoulder stop type is determined,
determine that a minimal risk condition is satisfied when the vehicle is stopped on the shoulder of a road within the specified time, and
control the vehicle to maintain a state in which the minimal risk condition is satisfied.

7. The autonomous driving vehicle of claim 5,
wherein the processor is configured to:
change the type of the minimal risk maneuver from the road shoulder stop type to an in-lane stop type when the vehicle is not stopped on the shoulder of a road within the specified time, and
control the vehicle to stop within a boundary of a lane in which the vehicle travels.

8. The autonomous driving vehicle of claim 7,
wherein the processor is configured to:
determine whether the vehicle is stopped within the lane in which the vehicle travels within a specified time from a time point when the type of the minimal risk maneuver is changed to the in-lane stop type,
determine that the minimal risk condition is satisfied when the vehicle is stopped within the lane in which the vehicle travels within the specified time, and
control the vehicle to maintain a state in which the minimal risk condition is satisfied.

9. The autonomous driving vehicle of claim 7,
wherein the processor is configured to:
change the type of the minimal risk maneuver from the in-lane stop type to a straight stop type when the vehicle is not stopped within the lane in which the vehicle travels within the specified time, and
control the vehicle to perform straight stop.

10. The autonomous driving vehicle of claim 1,
wherein the at least one function comprises at least one among acceleration, deceleration, lateral control, lane detection, lane change, steering, obstacle recognition and distance detection, powertrain control, and safe area detection.

11. A method for operating an autonomous driving vehicle, comprising:
obtaining surrounding environment information by sensing surrounding environment of the vehicle during autonomous driving of the vehicle;
obtaining vehicle state information by monitoring a state of the vehicle during the autonomous driving of the vehicle;
sensing whether minimal risk maneuver is needed based on at least one among the surrounding environment information and the vehicle state information during autonomous driving of the vehicle; and
controlling at least one function of the vehicle such that the vehicle is stopped on a road shoulder when the minimal risk maneuver is needed.

12. The method of claim 11,
wherein the controlling at least one function of the vehicle such that the vehicle is stopped on a road shoulder comprises:
determining a road shoulder stop type to be a type of the minimal risk maneuver; and
performing full-shoulder stop, or half-shoulder stop based on a size of the shoulder of a road,
wherein the full-shoulder stop is stopping the vehicle in a state in which the vehicle as a whole is positioned on the shoulder of a road, and
wherein the half-shoulder stop is stopping the vehicle in a state in which only some of the vehicle is positioned on the shoulder of a road.

13. The method of claim 12,
wherein the performing full-shoulder stop, or half-shoulder stop based on a size of the shoulder of a road comprises:
comparing a size of the shoulder of a road with a specified size;
performing the full-shoulder stop when the size of the shoulder of a road is equal to or greater than the specified size; and
performing the half-shoulder stop when the size of the shoulder of a road is equal to or smaller than the specified size, and
wherein the specified size is a predetermined size according to a size of the vehicle or a type of the vehicle.

14. The method of claim 12,
wherein the controlling at least one function of the vehicle such that the vehicle is stopped on a road shoulder further comprises:
controlling the vehicle to be moved to an outer-most lane after the road shoulder stop type is determined to be the type of the minimal risk maneuver; and
measuring the size of the shoulder of a road based on data collected from at least one sensor in a state in which the vehicle is positioned in the outermost lane.

15. The method of claim 12,
wherein the controlling at least one function of the vehicle such that the vehicle is stopped on a road shoulder further comprises:
obtaining information on the size of the shoulder of a road from map data.

16. The method of claim 12, further comprising:
determining whether the vehicle is stopped on the shoulder of a road within a specified time from a time point when the road shoulder stop type is determined;
determining that a minimal risk condition is satisfied when the vehicle is stopped on the shoulder of a road within the specified time; and
controlling the vehicle to maintain a state in which the minimal risk condition is satisfied.

17. The method of claim 15, further comprising:
when the vehicle is not stopped on the shoulder of a road within the specified time, changing the type of the minimal risk maneuver from the road shoulder stop type to an in-lane stop type; and
controlling the vehicle to stop within a boundary of a lane in which the vehicle travels.

18. The method of claim 17, further comprising:
determining whether the vehicle is stopped within the lane in which the vehicle travels within a specified time from a time point when the type of the minimal risk maneuver is changed to the in-lane stop type;
determining that the minimal risk condition is satisfied when the vehicle is stopped within the lane in which the vehicle travels within the specified time; and
controlling the vehicle to maintain a state in which the minimal risk condition is satisfied.

19. The method of claim 17, further comprising:
when the vehicle is not stopped within the lane in which the vehicle travels within the specified time, changing the type of the minimal risk maneuver from the in-lane stop type to a straight stop type; and
controlling the vehicle to perform straight stop.

20. The method of claim 11,
wherein the at least one function comprises controlling at least one among acceleration, deceleration, lateral control, lane detection, lane change, steering, obstacle recognition and distance detection, powertrain control, and safe area detection.
